# EUROPÄISCHE PATENTSCHRIFT

(11) **EP 3 512 731 B1**
(45) Veröffentlichungstag und Bekanntmachung des Hinweises auf die Patenterteilung: **21.10.2020**
(21) Anmeldenummer: 17761241.3
(22) Anmeldetag: 31.08.2017
(51) Int. Cl.: B60K 7/00, B60B 35/04, B60B 35/08

(54) **ACHSSYSTEM**
AXLE SYSTEM
SYSTÈME D'ESSIEU

(30) Priorität: 13.09.2016 DE 102016117164; 13.09.2016 DE 202016105072 U
(43) Veröffentlichungstag der Anmeldung: 24.07.2019
(73) Patentinhaber: SAF-HOLLAND GmbH, 63856 Bessenbach (DE)
(72) Erfinder: HÖSSLE, Florian, 5020 Salzburg (AT); KREINER, Kerstin, 63741 Aschaffenburg (DE); CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2017/071856
(87) Internationale Veröffentlichungsnummer: WO 2018/050442

(56) Entgegenhaltungen:
- DE-A1-102014 218 331
- FR-A1- 2 291 888

## Beschreibung

Die vorliegende Erfindung betrifft ein Achssystem, insbesondere zum Betrieb und zur Lagerung eines hydraulischen Zusatzmotors.

Achssysteme zur Lagerung von hydraulischen Zusatzmotoren und weiterer Fahrzeugkomponenten sind aus dem Stand der Technik in gewissem Maße bereits bekannt. Es wird dabei am Ende eines Achsstummels ein Zusatzantrieb, beispielsweise ein hydrostatischer Motor, festgelegt und überträgt ein Drehmoment auf die am Achsstummel gelagerte Radaufhängung. Zur Versorgung des Zusatzmotors mit Energie, beispielsweise über elektrische Kabel oder hydraulische Leitungen, ist es bekannt, externe Leitungen und Schläuche zum Zusatzmotor hinzuleiten. Weiterhin ist es bekannt, in den Achsstummel Bohrungen, insbesondere Kanäle einzubringen, durch welche Leitungen hindurchgesteckt werden können, um den Zusatzmotor mit entsprechender elektrischer Energie oder einem Hydraulikfluid versorgen zu können. Aufgrund der Schwächung des Achsstummels durch die eingebrachten Leitungen muss dabei der Achsstummel größer dimensioniert werden und es ergibt sich weiterhin das Problem, dass die Befestigung weiterer Fahrwerkskomponenten wie beispielsweise eines Bremsträgers oder eines Lenkerelements am Achsstummel zu weiteren Überdimensionierungen führen muss. Hier besteht ein großer Verbesserungsbedarf, wobei insbesondere der von dem Achssystem eingenommene Bauraum und das Gewicht des Achssystems optimiert werden muss.

Die DE 10 2014 218 331 A1 betrifft eine Achseinheit umfassend einen Achsstummel und ein Achsrohr, wobei der Achsstummel einen Längskanal aufweist, welcher sich innerhalb des Achsstummels im Wesentlichen längs einer Stummelachse erstreckt, wobei der Achsstummel einen Querkanal aufweist, welcher sich innerhalb des Achsstummels im Wesentlichen quer zur Stummelachse erstreckt.

Die FR 2 291 888 A1 betrifft ein hydraulisches Getriebe für ein Fahrzeug, welches durch eine Achse mit drei Hydraulikleitungen versorgt wird.

Aufgabe der vorliegenden Erfindung ist es, ein Achssystem bereitzustellen, welches die Versorgung eines hydraulischen Zusatzantriebes mit Hydraulikfluid erlaubt und dabei ein geringeres Gewicht und eine verbesserte Lebensdauer sowie einen geringeren Bauraum erreicht als die aus dem Stand der Technik bekannten Lösungen.

Diese Aufgabe wird gelöst mit einem Achssystem gemäß Anspruch 1. Weitere Vorteile und Merkmale der Erfindungen ergeben sich aus den abhängigen Ansprüchen.

Erfindungsgemäß umfasst das Achssystem einen Achsstummel mit den Merkmalen des Anspruchs 1. Der Achsstummel ist vorzugsweise ein im Wesentlichen vollkörperförmig ausgebildetes Bauteil, in welches zumindest zwei Kanäle eingebracht sind, welche sich im Wesentlichen parallel zur Stummelachse erstrecken. Erfindungsgemäß weisen die Kanäle darüber hinaus jeweils einen Abschnitt auf, welcher sich quer zur Stummelachse erstreckt, so dass die Kanäle seitlich aus dem Achsstummel heraustreten und in jeweils einen Anschlussabschnitt enden. Die Anschlussabschnitte sind dabei derart in einer Ebene angeordnet, dass sie bezogen auf die Länge des Achsstummels längs der Stummelachse im Wesentlichen auf gleicher Höhe angeordnet sind.

Vorzugsweise ist die Anschlussebene, in welcher die Anschlussabschnitte liegen, derart ausgerichtet, dass sie jeden Anschlussabschnitt mittig schneidet. Weiterhin ist die Anschlussebene orthogonal oder senkrecht zur Stummelachse angeordnet. An seinem ersten distalen Ende weist der Achsstummel vorzugsweise einen Lagerbereich zur Festlegung des Radlagers einer Radaufhängung auf. Angrenzend an den Lagerbereich, oder unmittelbar zu diesem benachbart, weist der Achsstummel einen Befestigungsbereich zur Festlegung eines Bremsträgers auf. Der Bremsträger ist dabei ein Bauteil, an welchem ein Bremssattel einer Scheibenbremse oder vorzugsweise eine Lagervorrichtung sowie eine Betätigungseinheit für Bremsbacken einer Trommelbremse festlegbar sind. Der Bremsträger greift dabei nur im Bereich des Befestigungsbereiches am Achsstummel an. Der Befestigungsbereich ist vorzugsweise als rotationssymmetrische oder zylinderförmige Fläche ausgebildet, welche auf der Außenseite des Achsstummels vorgesehen ist und an welcher der Bremsträger vorzugsweise festgeschweißt oder -geklemmt oder einstückig mit dem Achsstummel ausgebildet ist. Im letzteren bevorzugten Fall kann der Achsstummel gemeinsam mit dem Bremsträger als Schmiedeteil oder als Gussteil ausgebildet sein. Die Kanäle im Achsstummel erstrecken sich vom ersten distalen Ende des Achsstummels, unter dem Befestigungsbereich hindurch, bis hin zu dem ersten und dem zweiten Anschlussabschnitt. Aufgrund der Anordnung der Anschlussabschnitte in einer senkrecht zur Stummelachse und vorzugsweise im Wesentlichen parallel zum Befestigungsbereich des Achsstummels ausgerichteten Anschlussebene, können die Anschlussabschnitte sehr nah an dem Befestigungsbereich und somit sehr nah an dem am Achsstummel festlegbaren Bremsträger angeordnet werden. Es kann auf diese Weise eine deutliche Reduzierung des Bauraumes, welcher für die Anschlussabschnitte und den Bremsträger benötigt wird, erreicht werden. Insbesondere ist die axiale Erstreckung des Bereiches, in welchem die Anschlussabschnitte am Achsstummel vorgesehen sind, im Fall der vorliegenden Erfindung besonders klein.

Mit Vorteil ist der minimale Abstand der Anschlussabschnitte vom Befestigungsbereich kleiner als ein Drittel des Achsstummel-Durchmessers im Bereich des Befestigungsbereiches. Der minimale Abstand der Anschlussabschnitte vom Befestigungsbereich ist dabei ein Ausdruck dafür, wie eng die Anschlussabschnitte am Befestigungsbereich für den Bremsträger und somit am Bremsträger selbst, in dessen eingebauten Zustand, angeordnet sind. Bevorzugt ist dieser minimale Abstand dabei bezogen auf den Achsstummel-Durchmesser im Bereich des Befestigungsbereiches für den Bremsträger kleiner als ein Drittel dieses Achstummeldurchmessers. Es hat sich gezeigt, dass sofern der minimale Abstand unterhalb eines Drittels des Achsdurchmessers gehalten wird, eine besonders kompakte Bauweise des Achssystems erreicht werden kann. Für bestimmte Anwendungsmöglichkeiten kann es aber erforderlich sein, dass ein minimaler Abstand von beispielsweise einem Viertel nicht unterschritten wird, um ausreichend Platz für den Einsatz von Werkzeugen, insbesondere zur Festlegung der Anschlussabschnitte am Achsstummel freigelassen werden muss.
Besonders bevorzugt ist dabei das Verhältnis des minimalen Abstandes der Anschlussabschnitte vom Befestigungsbereich zum Achsstummel-Durchmesser im Bereich des Befestigungsbereiches zwischen 0,05 und 0,25 und vorzugsweise bei ca. 0,1 bis 0,2. Ein minimaler Abstand der Anschlussabschnitte zum Befestigungsbereich von nur 0,05 des Achsstummeldurchmessers ist dabei insbesondere dann bevorzugt, wenn das für das Befestigen der Anschlussabschnitte am Achsstummel benötigte Werkzeug kaum oder nur sehr wenig Bauraum benötigt. In diesem Fall kann eine besonders kompakte Ausbildung des Achssystems erreicht werden. Der bevorzugte Bereich von 0,20 bis 0,25 hat sich insbesondere dann bewährt, wenn im Bereich der Anschlussabschnitte für einen Anwender aus verschiedenen Richtungen bezogen auf das Achssystem mit Werkzeug erreichbar sein soll, um die Anschlussabschnitte am Achsstummel festzulegen.

Vorzugsweise weist der Achsstummel im Bereich der Anschlussabschnitte einen teilweise polygonalen Querschnitt auf. Insbesondere weist der Achsstummel dabei dort, wo die Anschlussabschnitte am Achsstummel ausgebildet oder festlegbar sind, jeweils ebene Flächen auf, in welchen besonders einfach eine dichte Verbindung zwischen dem jeweiligen Kanal und einer im Anschlussabschnitt festgelegten Hydraulikleitung hergestellt werden kann.

Besonders bevorzugt ist es, dass der Achsstummel im Bereich jedes der Anschlussabschnitte eine Abflachung aufweist. Durch die Abflachung an vorzugsweise jedem der Anschlussabschnitte können die für die Anschlussabschnitte nötigen Bohrungen auf besonders einfache Weise in den Achsstummel eingebracht werden. Mit Vorteil ist der Achsstummel nur in unmittelbarer Nähe zu den Anschlussabschnitten lokal abgeflacht ausgebildet und ansonsten rotationssymmetrisch oder zylinderförmig ausgebildet, um die Festigkeit des Achsstummels, insbesondere die Torsionssteifigkeit, nicht mehr als nötig zu beeinträchtigen. Die Abflachungen können dabei aus als Senkung ausgeführt sein.

Ferner bevorzugt erstrecken sich die Anschlussabschnitte innerhalb eines in der Anschlussebene liegenden ersten Kreissektors, wobei sich der Kreissektor mit einem ersten Sektorwinkel erstreckt, und wobei der erste Sektorwinkel im Bereich von 25° bis 160° und vorzugsweise im Bereich von 45° bis 90° liegt. Neben der Anordnung der Anschlussabschnitte derart, dass diese in einer gemeinsamen Anschlussebene liegen, ist es darüber hinaus bevorzugt, dass die Anschlussabschnitte nur in einem eingeschränkten Kreissektor eines sich in der Anschlussebene erstreckenden Kreises, insbesondere des Querschnitts des Achsstummels, erstrecken. Dabei beträgt der Kreissektor vorzugsweise weniger als die Hälfte des vollen Querschnitts des Achsstummels, so dass die Anschlussabschnitte vorzugsweise nur auf einer Seite des Achsstummels angeordnet sind und besonders bevorzugt nur in einem Drittel des Querschnitts des Achsstummels vorgesehen sind. Auf diese Weise wird genug Bauraum im Nachbarbereich der Anschlussabschnitte freigelassen, um beispielsweise einen Bremssattel am Bremsträger festzulegen, welcher sich teilweise in die Anschlussebene hinein erstreckt, dabei aber die Anschlussabschnitte nicht kontaktiert.

Weiterhin bevorzugt ist am Achsstummel ein Bremsträger mit einem Befestigungsbereich für einen Bremssattel festgelegt, wobei sich der Bremssattel innerhalb eines in die Anschlussebene projizierten zweiten Kreissektors erstreckt, wobei der zweite Kreissektor sich mit einem zweiten Sektorwinkel erstreckt und wobei der zweite Sektorwinkel in Bereich von 90° bis 240°, vorzugsweise im Bereich von 160° bis 200° liegt. Insbesondere für den Fall, dass ein Bremssattel am Bremsträger festgelegt ist und im Wesentlichen parallel zur Stummelachse relativ zum Bremsträger verschiebbar ist, ist es nötig, dass einen Freiraum bereitzustellen, um eine freie Bewegung des Bremssattels zu ermöglichen ohne dass dieser mit den Anschlussabschnitten kollidiert. Weiterhin müssen für die Versorgung des Betätigungselements der Bremse Leitungen zum Bremssattel und zum Bremszylinder gelegt werden können, welche wiederum mit den Leitungen, die an den Anschlussabschnitten angeschlossen werden können, nicht kollidieren dürfen. Aus diesem Grund erstreckt sich der Bremssattel vorzugsweise ebenfalls in einem Kreissektor, wobei dieser Kreissektor vorzugsweise in die Anschlussebene projiziert die Erstreckung des Bremssattels widergibt. Vorzugsweise ist im Achssystem dabei ein Bereich für die Erstreckung des Bremssattels in einem zweiten Sektorwinkel von 90° bis 240° möglich. Ein Sektorwinkel im Bereich von 90° ergibt sich dann, wenn lediglich ein Teil des Bremssattels in den Bereich der Anschlussabschnitte, bzw. bis zur Höhe der Anschlussebene gelangt. Ein Bereich von 240° kann sich insbesondere dann ergeben, wenn neben dem Bremssattel selbst noch weitere periphere Systeme an dem Bremssattel oder benachbart zu diesem angeordnet und festgelegt sind, welche nicht mit den Anschlussabschnitten kollidieren dürfen. Der Winkelbereich von 160° bis 240° ist der typische Kreissektorbereich welcher von Bremssystemen mit Scheibenbremse und einem Schwimmsattel eingenommen wird. Entsprechend ist es Vorteilhaft das Achssystem für den Einsatz solcher Bremssysteme zu optimieren.

Besonders bevorzugt weist der zweite Kreissektor, d.h. der Kreissektor, von welchem sich der Bremssattel erstreckt, keine Überlappung mit dem ersten Kreissektor, also dem Kreissektor, in welchem sich die Anschlussabschnitte erstrecken, auf. Auf diese Weise kann mit Vorteil eine Kollision der Anschlussabschnitte mit dem Bremsträger, bzw. mit dem am Bremsträger festgelegten Bremssattel verhindert werden.

Weiterhin bevorzugt ist die Summe des ersten Sektorwinkels und des zweiten Sektorwinkels kleiner als 300° und liegt bevorzugt im Bereich von 220° bis 270°.

Auf diese Weise wird neben der Erstreckung des Bremssattels und der Anschlussabschnitte noch weiterer Platz für weitere periphere Systeme im Achssystem freigelassen. Solche Systeme können beispielsweise ein ABS-Sensor oder Temperatursensoren im Bereich der Radnabe sein.

In einem Zustand, in welchem der Achsstummel in einem Nutzfahrzeug verbaut ist, sind die Anschlussabschnitte vorzugsweise auf der der Fahrbahn abgewandten Seite des Achsstummels angeordnet. Insbesondere für den Fall, dass der Achsstummel im Fahrwerk des Nutzfahrzeuges festgelegt ist und das Nutzfahrzeug auf einer Fahrbahn steht oder rollt, sind die Anschlussabschnitte am Achsstummel vorzugsweise in der Hälfte des Achsstummels vorgesehen, welche der Fahrbahn abgewandt sind. Der Kreissektor, in welchem sich die Anschlussabschnitte erstrecken, ist somit weiterhin dadurch gekennzeichnet, dass dieser Kreissektor zumindest überwiegend oder vollständig vorzugsweise auf der Oberseite bzw. der der Fahrbahn abgewandten Seite des Achsstummels angeordnet ist. Auf diese Weise kann ein Schutz der Anschlussabschnitte und der daran angeschlossenen Leitungen vor aufgewirbelten Fremdkörpern erreicht werden und somit die Lebensdauer des Achssystems deutlich verbessert werden.

Mit Vorteil weisen die Anschlussabschnitte jeweils ein Einschraubelement auf, wobei die Einschraubelemente jeweils ein Außengewinde zum Eingriff mit dem Achsstummel aufweisen. Mit Vorteil ist somit der Anschlussabschnitt über eine lösbare form- und kraftschlüssige Verbindung am Achsstummel festgelegt. Die Einschraubelemente können dabei untrennbar mit Hydraulikleitungen verbunden sein, wobei zwischen den jeweils zueinander beweglichen Teilen zusätzlich noch Dichtungselemente eingebracht sind. Der Vorteil von lösbaren Verbindungen zwischen den Hydraulikleitungen und den in dem Achsstummel eingebrachten Kanälen ist, dass zu Wartungszwecken einzelne Anschlussabschnitte demontiert werden können, ohne dass es einer Zerstörung einer stoffschlüssigen oder formschlüssigen Verbindung bedarf.

Insbesondere bevorzugt ist zwischen den Anschlussabschnitten ein Zwischenraum mit einer minimalen Breite freigelassen, wobei die Breite ein 0,8- bis 1,5-faches des maximalen Durchmessers der Anschlussabschnitte ist. Der Durchmesser der Anschlussabschnitte ist dabei vorzugsweise ein senkrecht zur Radialrichtung des Achsstummels definierter Durchmesser eines Querschnitts der Anschlussabschnitte. Die Anschlussabschnitte erstrecken sich dabei vorzugsweise im Wesentlichen rotationssymmetrisch, abgesehen von ggf. Außensechskant-Geometrien für den Eingriff eines Werkzeuges, um diese Radialrichtung des Achsstummels, welche orthogonal zur Stummelachse verläuft. Der Zwischenraum zwischen den Anschlussabschnitten soll dabei vorzugsweise ein 0,8- bis 1,5-faches des maximalen Durchmessers der Anschlussabschnitte aufweisen, wobei dies insbesondere die Verwendung von Werkzeug, insbesondere von Schlüsseln zur Verschraubung der Anschlussabschnitte am Achsstummel, erlaubt.

Ferner bevorzugt sind die Anschlussabschnitte im Wesentlichen rotationssymmetrisch um je eine Anschlussachse ausgebildet sind, wobei die Anschlussachsen in der Anschlussebene liegen, wobei die Anschlussachsen einen Anschlusswinkel aufspannen, wobei der Anschlusswinkel größer als 20° und bevorzugt größer als 30° ist. Ein Anschlusswinkel von mehr als 20° ist für besonders große Achsstummel ausreichend, da hierbei genügend Freiraum zwischen den Anschlussabschnitten bleibt, um mit einem Werkzeug bevorzugte Einschraubelemente am Achsstummel festlegen zu können. Bei einem Anschlusswinkel, welcher stets größer gleich 30° ist, ist dieser ausreichende Freiraum immer gewährleistet.

Vorzugsweise ist auf der dem Befestigungsbereich abgewandten Seite der Anschlussabschnitte ein Lenkerelement mittelbar oder unmittelbar am Achsstummel festgelegt oder festlegbar, wobei der minimale Abstand der Anschlussabschnitte vom Lenkerelement kleiner als zwei Drittel des Achsstummeldurchmessers im Bereich des Befestigungsbereiches ist. Zusätzlich zu einem Bremsträger ist am Achsstummel vorzugsweise noch ein Lenkerelement festgelegt oder festlegbar. Dabei sind die Anschlussabschnitte vorzugsweise zwischen dem Befestigungsbereich zur Festlegung des Bremsträgers und dem Lenkerelement angeordnet. Von beiden begrenzenden Bauteilen sollen die Anschlussabschnitte dabei einen entsprechenden Mindestabstand aufweisen, der zwei Drittel des Achsstummeldurchmessers im Bereich des Befestigungsbereiches nicht überschreitet. Hierdurch kann wiederum der Bauraum des Achssystems, bzw. eine kompakte Ausbildung optimiert werden. Es verringert sich dadurch insbesondere die Gesamtlänge des Achsstummels und es können die auf das Lenkerelement wirkenden Drehmomente reduziert werden, da die Hebelarme, verursacht durch die Biegekraft, welche von der Radaufhängung des Nutzfahrzeuges auf den Achsstummel übertragen wird, reduziert werden. Insbesondere bei Ausführungsformen, bei denen unmittelbar benachbart zu den Anschlussabschnitten ein Achsrohr am Achsstummel festlegbar ist, wobei der Längslenker am Achsrohr festgelegt ist, kann der minimale Abstand der Anschlussabschnitte vom Lenkerelement nur die Hälfte des Achsstummeldurchmessers betragen. Besonders bevorzugt beträgt der minimale Abstand der Anschlussabschnitte vom Lenkerelement ca. 50 mm bis 60 mm.

Insbesondere bevorzugt ist neben dem ersten und dem zweiten Anschlussabschnitt ein weiterer Anschlussabschnitt oder weitere Anschlussabschnitte am Achsstummel vorgesehen, welche in der Anschlussebene liegen. Zusätzlich zu den zwei bisher beschriebenen Anschlussabschnitten ist es bevorzugt, dass weitere Anschlussabschnitte am Achsstummel vorgesehen sind, wobei verständlicherweise auch weitere Kanäle in den Achsstummel eingebracht sind. Je nach Typ eines hydraulischen Motors, welcher am Achssystem betrieben werden soll, ist es erforderlich, dass mehr als zwei Leitungen für Hydraulikfluid oder die Leckage von Hydraulikfluid, am Achsstummel ausgebildet sind. Besonders bevorzugt sind drei Leitungen vorgesehen, wobei eine Leitung eine Totleitung ist, welche der Rückführung von Leckagefluid in einen Vorratsbehälter dient. Bevorzugt sind dabei auch die weiteren Anschlussabschnitte in der Anschlussebene angeordnet, so dass eine besonders kompakte Ausbildung des Achsstummels und somit des Achssystems erreicht werden kann.

Mit Vorteil sind drei Anschlussabschnitte vorgesehen. Drei Anschlussabschnitte ermöglichen insbesondere die Anordnung eines hydrostatischen Motors, welcher einen gesonderten Anschluss für Leckagefluid aufweist. Es kann somit verhindert werden, dass Leckagefluid in die Umgebung entweicht, da dieses insbesondere über die dritte Leitung bzw. den dritten Kanal und den dritten Anschlussabschnitt in einen entsprechenden Sammelbehälter zurückgeführt werden kann.

Weiterhin bevorzugt hat zumindest die Mehrzahl der Anschlussabschnitte oder haben bevorzugt sämtliche Anschlussabschnitte den gleichen Abstand vom Befestigungsbereich. Mit anderen Worten liegt zumindest die Mehrzahl der Anschlussabschnitte in ein und derselben Anschlussebene. Auf diese Weise kann die axiale Baulänge des Bereiches in dem die Anschlussabschnitte angeordnet sind minimiert werden, was wiederum einen kürzeren Achsstummel und verringerte Biegemomente am Achsstummel erlaubt. Insbesondere wenn alle Anschlussabschnitte mittig von der Anschlussebene geschnitten werden kann der Bauraum zwischen dem Befestigungsbereich für den Bremsträger und dem Bereich in welchem der Längslenker festgelegt wird besonders kurz ausgelegt werden. Es versteht sich dabei, dass der Platz, welcher zum Anschluss von Leitungen an die Anschlussabschnitte gebraucht wird, in diesem bevorzugten Fall durch gleichmäßige Verteilung der Anschlussabschnitte in verschiedenen radialen Richtungen erfolgt, wie zuvor und mit Bezug auf die Anschlussachsen erläutert wurde.

Weitere Vorteile und Merkmale der vorliegenden Erfindung ergeben sich aus der nachfolgenden Beschreibung mit Bezug auf die beigefügten Figuren. Es versteht sich, dass einzelne nur in einer der Figuren gezeigt Merkmale auch in Ausführungsformen anderer Figuren Verwendung finden können, sofern dies nicht explizit ausgeschlossen wurde oder sich aufgrund technischer Gegebenheiten verbietet.

Es zeigen:
- Fig. 1: eine Seitenansicht einer bevorzugten Ausführungsform des Erfindungsgemäßen Achssystems,
- Fig. 2: eine in der Anschlussebene geschnittene Ansicht des in Fig. 1 gezeigten Achssystems,
- Fig. 3: eine Seitenansicht einer weiteren bevorzugten Ausführungsform eines erfindungsgemäßen Achssystems, und
- Fig.4: eine Schnittansicht des in Fig. 3 gezeigten Achssystems.

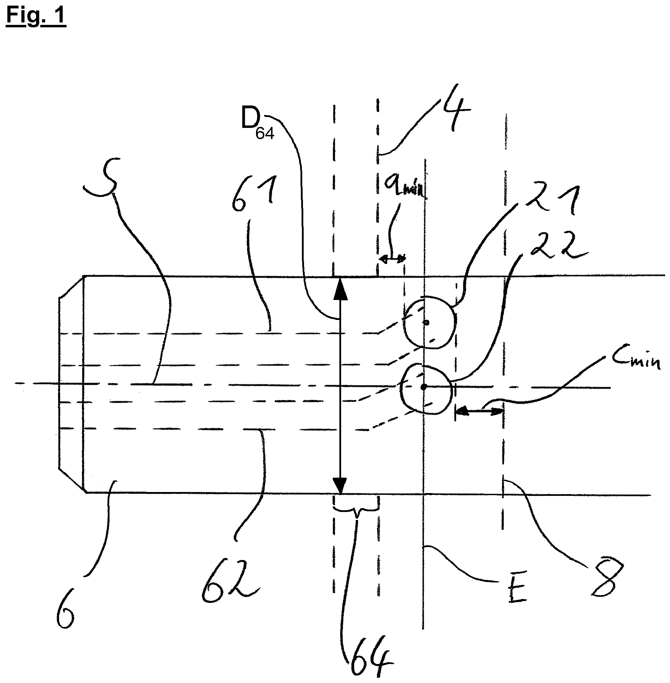

Das Achssystem, welches in Fig. 1 dargestellt ist, weist einen Achsstummel 6 mit einem Befestigungsbereich 64 zur Festlegung eines Bremsträgers 4 (gestrichelt dargestellt) auf. In den Achsstummel 6 sind zwei Kanäle 61, 62 eingebracht, welche an der in der Figur links gezeigten Stirnwand des Achsstummels 6 münden und dort mit einem Zusatzmotor in hydraulische Wirkverbindung gebracht werden können. Auf der dem links gezeigten ersten distalen Ende abgewandten Seite weisen die Kanäle jeweils einen quer zur Stummelachse S verlaufenden Abschnitt auf, welcher schließlich in einen Anschlussabschnitt 21, 22 im Bereich der Mantelfläche des Achsstummels 6 mündet. Lediglich durch eine Strichlinie dargestellt ist, dass am Achsstummel 6 auch ein Längslenker 8 festgelegt sein kann, wobei die Anschlussabschnitte 21, 22 vorzugsweise zwischen dem Längslenker 8 und dem Bremsträger 4 angeordnet sind. Weiterhin ist dargestellt, dass im Bereich zwischen den Anschlussabschnitten und dem Bremsträger 4 ein Sensorhalter 65 ausgebildet ist. Die Anschlussabschnitte 21, 22 erstrecken sich dabei derart, dass sie im Wesentlichen mittig von einer Anschlussebene E geschnitten werden. Die Anschlussebene E liegt dabei erfindungsgemäß orthogonal zur Stummelachse S. Der minimale Abstand aₘᵢₙ der Anschlussabschnitte 21, 22 vom Befestigungsbereich 64 beträgt vorzugsweise weniger als ein Drittel des Achsstummeldurchmessers im Bereich des Befestigungsbereiches 64. Weiterhin beträgt der minimale Abstand cₘᵢₙ der Anschlussabschnitte 21, 22 vom rechts in der Figur angedeuteten Lenkerelement 8 vorzugsweise weniger als zwei Drittel des Achsstummeldurchmessers im Bereich des Befestigungsbereiches 64. In der dargestellten bevorzugten Ausführungsform beträgt dieser minimale Abstand cₘᵢₙ ca. 50 mm bis 60 mm.

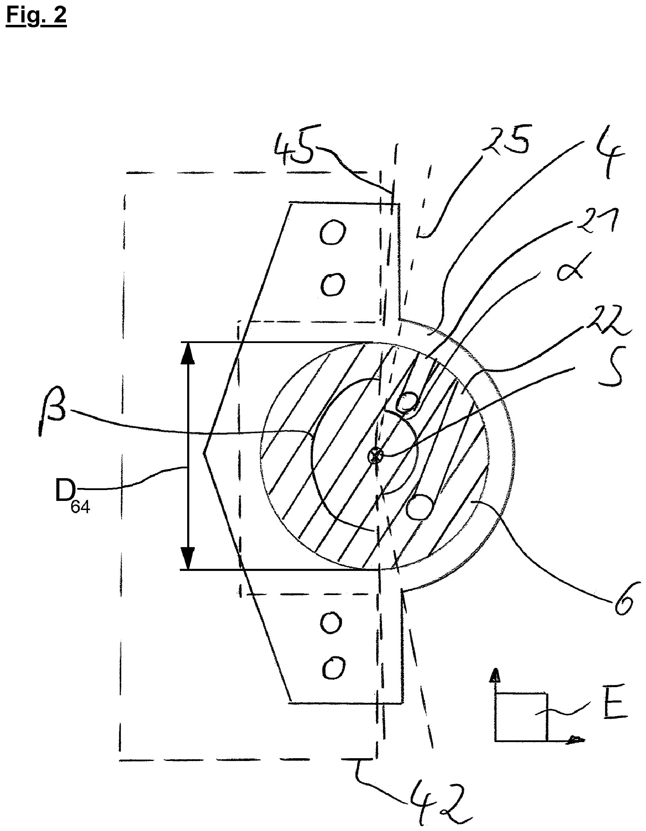

Fig. 2 zeigt eine in der Anschlussebene E geschnittene Ansicht des in Fig. 1 gezeigten Achssystems. Dargestellt ist hierbei die Erstreckung des mit durch gestrichelte Linien angedeuteten Bremsträgers 4, an welchem ein gestrichelt dargestellter Bremssattel 42 derart festlegbar ist, dass er parallel zur Stummelachse S verschiebbar zum Bremsträger 4 bleibt. Fig. 2 zeigt weiterhin den ersten Kreissektor 25, welcher sich mit einem ersten Sektorwinkel α erstreckt. Innerhalb des ersten Kreissektors 25 sind dabei der erste Anschlussabschnitt 21 und der zweite Anschlussabschnitt 22 angeordnet. Weiterhin ist bevorzugt, dass sich der Bremssattel 42 innerhalb eines zweiten Kreissektors 45 erstreckt, wobei der zweite Kreissektor 45 vorzugsweise einen zweiten Sektorwinkel β erstreckt. In Fig. 2 wird deutlich, dass der erste Kreissektor 25 und der zweite Kreissektor 45 keine Überlappungen bilden, sondern ganz im Gegenteil zwischen den beiden Kreissektoren ein relativ großer Winkelspielraum frei bleibt.

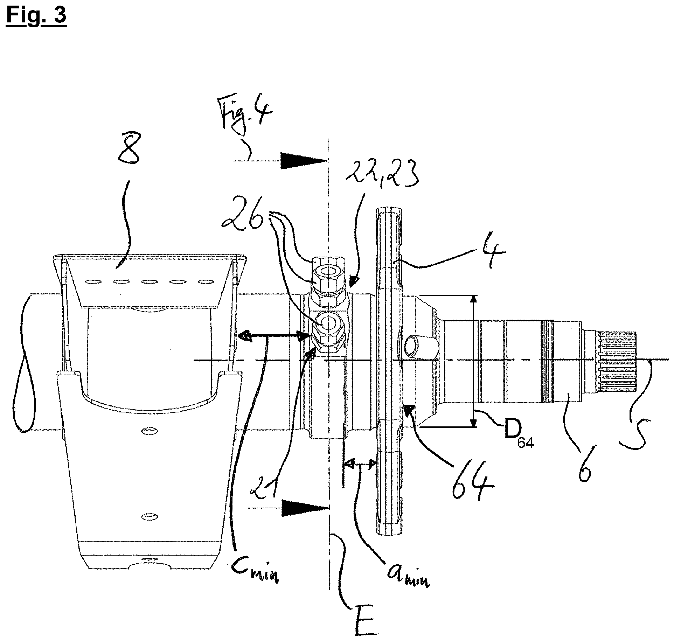

Fig. 3 zeigt eine Seitenansicht einer weiteren bevorzugten Ausführungsform eines Achssystems, wobei zusätzlich zum ersten und zweiten Anschlussabschnitt 21, 22 ein dritter Anschlussabschnitt 23 vorgesehen ist, welcher ebenfalls in der Anschlussebene E liegt. Der dritte Anschlussabschnitt 23 steht dabei mit einem dritten Kanal 63 (nicht dargestellt) in fluidleitender Verbindung. Das Lenkerelement 8 ist bei dieser Ausführungsform an einem Achsrohr festgelegt, welches in unmittelbarer Nähe zu den Verbindungsabschnitten 21, 22, 23 mit dem Achsstummel 6 verschweißt ist. Somit ist das Lenkerelement 8 mittelbar über das Achsrohr am Achsstummel 6 festgelegt. Die weiteren Merkmale, welche mit den gleichen Bezugszeichen, wie bei der in Fig.1 gezeigten Ausführungsform bezeichnet sind, entsprechen den bereits zu Fig. 1 beschriebenen Merkmalen.

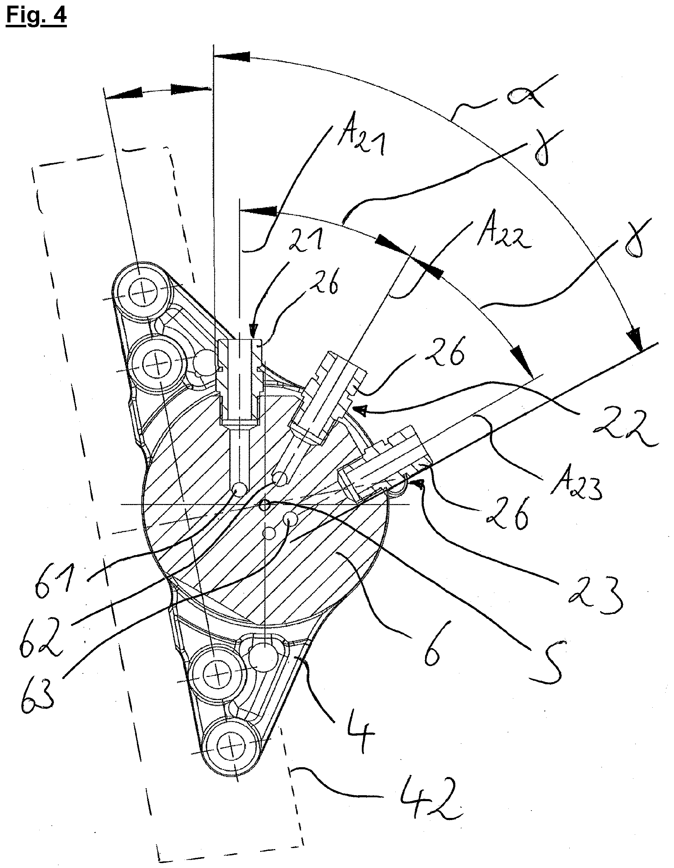

Fig. 4 zeigt einen Schnitt durch die in Fig. 3 gezeigte Ausführungsform eines Achssystems, wobei die Anschlussebene E die Schnittebene ist. Vorzugsweise ist an jedem der Anschlussabschnitte 21, 22, 23 ein Einschraubelement 26 vorgesehen und mit einem Außengewinde in die entsprechende Bohrung im Achsstummel 6 eingeschraubt. Die Anschlussabschnitte 21, 22, 23 sowie die Einschraubelemente 26 erstrecken sich in diesem Zustand im Wesentlichen rotationssymmetrisch zu je einer Anschlussachse A₂₁, A₂₂, A₂₃. Um eine gute Erreichbarkeit der Einschraubelemente 26 für Werkzeug zum Befestigen der Einschraubelemente 26 zu gewährleisten, spannen dabei je zwei benachbarte Anschlussachsen A₂ₓ einen in der Anschlussebene E liegenden Anschlusswinkel γ auf. Vorzugsweise sind die beiden zwischen den drei Anschlussachsen A₂₁, A₂₂, A₂₃ aufgespannten Anschlusswinkel γ identisch und es kann eine gute Erreichbarkeit bei geringem Bauraumbedarf für sämtliche Einschraubelemente 26 erreicht werden. Die Anschlusswinkel sind dabei vorzugsweise größer als 30°. Der in Fig. 4 dargestellte Bremsträger 4 ist besonders bevorzugt ein Bremsträger 4 zur Festlegung eines Schwimmsattels 42 und weist mit Vorteil vier Befestigungspunkte zur Festlegung eines solchen Bremssattels 42 auf.

Bezugszeichen:
- 21: - erster Anschlussabschnitt
- 22: - zweiter Anschlussabschnitt
- 23: - dritter Anschlussabschnitt
- 25: - erster Kreissektor
- 26: - Einschraubelement
- 4: - Bremsträger
- 42: - Bremssattel
- 6: - Achsstummel
- 61: - erster Kanal
- 62: - zweiter Kanal
- 63: - dritter Kanal
- 64: - Befestigungsbereich
- 8: - Längslenker
- α: - erster Sektorwinkel
- β: - zweiter Sektorwinkel
- γ: - Anschlusswinkel
- A_{21,22,...}: - Anschlussachse
- aₘᵢₙ: - Abstand Anschlussabschnitte - Befestigungsbereich
- cₘᵢₙ: - Abstand Anschlussabschnitte - Lenkerelement
- E: - Anschlussebene
- S: - Stummelachse

## Patentansprüche

1. Achssystem umfassend einen Achsstummel (6),
wobei der Achsstummel (6) an seiner Außenseite im Wesentlichen rotationssymmetrisch um eine Stummelachse (S) ausgebildet ist und zwei Kanäle (61, 62) aufweist, welche sich bereichsweise parallel zur Stummelachse (S) erstrecken,
wobei die Kanäle (61, 62) jeweils einen Abschnitt aufweisen, welcher sich quer zur Stummelachse (S) erstreckt,
wobei der erste Kanal (61) in einen ersten Anschlussabschnitt (21) und der zweite Kanal (62) in einen zweiten Anschlussabschnitt (22) jeweils im Bereich der Mantelfläche des Achsstummels (6) mündet,
wobei die Anschlussabschnitte (21, 22) in einer Anschlussebene (E) liegen, welche orthogonal zur Stummelachse (S) ausgerichtet ist,
wobei der Achsstummel (6) einen Befestigungsbereich (64) zur Festlegung eines Bremsträgers (4) aufweist, wobei der Bremsträger (4) sich parallel zur Anschlussebene (E) erstreckt,
**dadurch gekennzeichnet, dass**
der minimale Abstand (aₘᵢₙ) der Anschlussabschnitte (21, 22) vom Befestigungsbereich (64) kleiner als ein Drittel des Achsstummeldurchmessers (D₆₄) im Bereich des Befestigungsbereiches (64) ist.

2. Achssystem nach Anspruch 1,
wobei das Verhältnis des minimalen Abstandes (aₘᵢₙ) zum Achsstummel-durchmesser (D₆₄) zwischen 0,05 und 0,25 und vorzugsweise bei ca. 0,1 bis 0,2 liegt.

3. Achssystem nach einem der vorhergehenden Ansprüche,
wobei der Achsstummel (6) im Bereich jedes Anschlussabschnitts (21, 22, 23) eine Abflachung aufweist.

4. Achssystem nach einem der vorhergehenden Ansprüche,
wobei sich die Anschlussabschnitte (21, 22) innerhalb eines in der Anschlussebene (E) liegenden ersten Kreissektor (25) erstrecken,
wobei der Kreissektor sich mit einem ersten Sektorwinkel (α) erstreckt, wobei der erste Sektorwinkel (α) im Bereich von 25° bis 160° und vorzugsweise im Bereich von 45° bis 90° liegt.

5. Achssystem nach einem der vorhergehenden Ansprüche,
wobei am Achsstummel (6) ein Bremsträger (4) mit einem Befestigungsbereich für einen Bremssattel (42) festgelegt ist,
wobei sich der am Bremsträger festgelegte Bremssattel (42) innerhalb eines in die Anschlussebene (E) projizierten zweiten Kreissektors (45) erstreckt,
wobei der zweite Kreissektor (45) sich mit einem zweiten Sektorwinkel (β) erstreckt,
wobei der zweite Sektorwinkel (β) im Bereich von 90° bis 240°, vorzugsweise im Bereich von 160° bis 200° liegt.

6. Achssystem nach Anspruch 4 und 5,
wobei der zweite Kreissektor (45) keine Überlappung mit dem ersten Kreissektor (25) aufweist.

7. Achssystem nach einem der vorhergehenden Ansprüche,
wobei in einem Zustand, in welchem der Achsstummel (6) an einem Nutzfahrzeug verbaut ist, die Anschlussabschnitte (21, 22) auf der, der Fahrbahn abgewandten Seite des Achsstummels (6) angeordnet sind.

8. Achssystem nach einem der vorhergehenden Ansprüche,
wobei die Anschlussabschnitte (21, 22) jeweils ein Einschraubelement (26,) aufweisen,
wobei die Einschraubelemente (26) jeweils ein Außengewinde zum Eingriff mit dem Achsstummel (6) aufweisen.

9. Achssystem nach einem der vorhergehenden Ansprüche,
wobei zwischen den Anschlussabschnitten (21, 22) ein Zwischenraum mit einer minimalen Breite frei ist,
wobei die Breite ein 0,8- bis 1,3-faches des maximalen Durchmessers der Anschlussabschnitte (21, 22) ist.

10. Achssystem nach einem der vorhergehenden Ansprüche,
wobei die Anschlussabschnitte (21, 22) im Wesentlichen rotationssymmetrisch um je eine Anschlussachse (A₂₁, A₂₂) ausgebildet sind,
wobei die Anschlussachsen (A₂₁, A₂₂) in der Anschlussebene (E) liegen,
wobei die Anschlussachsen (A₂₁, A₂₂) einen Anschlusswinkel (γ) aufspannen,
wobei der Anschlusswinkel (γ) größer als 20° und bevorzugt größer gleich 30° ist.

11. Achssystem nach einem der vorhergehenden Ansprüche,
wobei auf der dem Befestigungsbereich (64) abgewandten Seite der Anschlussabschnitte (21, 22) ein Lenkerelement (8) mittelbar oder unmittelbar am Achsstummel (6) festlegbar ist,
wobei der minimale Abstand (cₘᵢₙ) der Anschlussabschnitte (21, 22) vom Lenkerelement (8) kleiner als zwei Drittel des Achsstummeldurchmessers (D₆₄) im Bereich des Befestigungsbereiches (64) ist.

12. Achssystem nach einem der vorhergehenden Ansprüche,
wobei neben dem ersten und dem zweiten Anschlussabschnitt (21, 22) weitere Anschlussabschnitte (23) am Achsstummel (6) vorgesehen sind, welche in der Anschlussebene (E) liegen.

13. Achssystem nach Anspruch 12,
wobei drei Anschlussabschnitte (21, 22, 23) vorhanden sind.

14. Achssystem nach einem der vorhergehenden Ansprüche,
wobei zumindest die Mehrzahl der Anschlussabschnitte (21, 22, 23) oder sämtliche Anschlussabschnitte (21, 22, 23) den gleichen Abstand vom Befestigungsbereich (64) aufweisen.

## Claims

1. An axle system comprising an axle stub (6),
wherein the axle stub (6) is embodied on its outer side so as to be essentially rotationally symmetrical about a stub axis (S) and has two ducts (61, 62) which extend parallel to the stub axis (S) in certain regions,
wherein the ducts (61, 62) each have a section, which extends transversely with respect to the stub axis (S),
wherein the first duct (61) opens into a first connecting section (21) and the second duct (62) opens into a second second connecting section (22) in each case in the region of the lateral face of the axle stub (6),
wherein the connecting sections (21, 22) lie in a connecting plane (E) which is oriented orthogonally with respect to the stub axis (S),
wherein the axle stub (6) has an attachment region (64) for securing a brake carrier (4), wherein the brake carrier (4) extends parallel to the connecting plane (E),
**characterized in that**
the minimum distance (aₘᵢₙ) of the connecting sections (21, 22) from the attachment region (64) is less than a third of the axle stub diameter (D₆₄) in the region of the attachment region (64).

2. The axle system as claimed in claim 1,
wherein the ratio of the minimum distance (aₘᵢₙ) to the axle stub diameter (D₆₄) is between 0.05 and 0.25 and preferably approximately 0.1 to 0.2.

3. The axle system as claimed in one of the preceding claims,
wherein the axle stub (6) has a flattened portion in the region of each connecting section (21, 22, 23).

4. The axle system as claimed in one of the preceding claims,
wherein the connecting sections (21, 22) extend within a first circle sector (25) lying in the connecting plane (E),
wherein the circle sector extends with a first sector angle (α),
wherein the first sector angle (α) lies in the range from 25° to 160° and preferably in the range from 45° to 90°.

5. The axle system as claimed in one of the preceding claims,
wherein a brake carrier (4) with an attachment region for a brake caliper (42) is secured to the axle stub (6),
wherein the brake caliper (42) which is secured to the brake carrier extends within a second circle sector (45) which is projected into the connecting plane (E),
wherein the second circle sector (45) extends with a second sector angle (β),
wherein the second sector angle (β) lies in the range from 90° to 240°, preferably in the range from 160° to 200°.

6. The axle system as claimed in claims 4 and 5,
wherein the second circle sector (45) does not have an overlap with the first circle sector (25).

7. The axle system according to one of the preceding claims,
wherein in a state in which the axle stub (6) is installed on a utility vehicle, the connecting sections (21, 22) are arranged on the side of the axle stub (6) facing away from the roadway.

8. The axle system as claimed in one of the preceding claims,
wherein the connecting sections (21, 22) each have a screw-in element (26),
wherein the screw-in elements (26) each have an external thread for engagement with the axle stub (6).

9. The axle system as claimed in one of the preceding claims,
wherein an intermediate space with a minimum width is free between the connecting sections (21, 22),
wherein the width is 0.8 to 1.3 times the maximum diameter of the connecting sections (21, 22).

10. The axle system as claimed in one of the preceding claims,
wherein the connecting sections (21, 22) are embodied so as to be essentially rotationally symmetrical about one connecting axle (A₂₁, A₂₂) each,
wherein the connecting axles (A₂₁, A₂₂) lie in the connecting plane (E),
wherein the connecting axles (A₂₁, A₂₂) span a connecting angle (γ),
wherein the connecting angle (γ) is greater than 20° and preferably greater than or equal to 30°.

11. The axle system as claimed in one of the preceding claims,
wherein a radius link element (8) can be secured indirectly or directly to the axle stub (6), on the side of the connecting sections (21, 22) facing away from the attachment region (64),
wherein the minimum distance (cₘᵢₙ) of the connecting sections (21, 22) from the radius link element (8) is less than two thirds of the axle stub diameter (D₆₄) in the region of the attachment region (64).

12. The axle system as claimed in one of the preceding claims,
wherein, in addition to the first and second connecting sections (21, 22), further connecting sections (23) which lie in the connecting plane (E) are provided on the axle stub (6).

13. The axle system as claimed in claim 13,
wherein three connecting sections (21, 22, 23) are present.

14. The axle system as claimed in one of the preceding claims,
wherein at least the majority of the connecting sections (21, 22, 23) or all the connecting sections (21, 22, 23) are at the same distance from the attachment region (64).

## Revendications

1. Système d'essieu comprenant un moignon d'essieu (6),
dans lequel
sur son côté extérieur, le moignon d'essieu (6) est réalisé sensiblement à symétrie de révolution autour d'un axe de moignon (S) et comprend deux canaux (61, 62) qui s'étendent localement parallèlement à l'axe de moignon (S),
les canaux (61, 62) comprennent chacun une portion qui s'étend transversalement à l'axe de moignon (S),
le premier canal (61) débouche dans une première portion de raccordement (21) et le second canal (62) débouche dans une seconde portion de raccordement (22), chacun au niveau de la surface enveloppe du moignon d'essieu (6),
les portions de raccordement (21, 22) se situent dans un plan de raccordement (E) qui est orienté orthogonalement à l'axe de moignon (S),
le moignon d'essieu (6) comprend une zone de fixation (64) pour immobiliser un support de frein (4), le support de frein (4) s'étendant parallèlement au plan de raccordement (E),
**caractérisé en ce que**
la distance minimale (aₘᵢₙ) des portions de raccordement (21, 22) par rapport à la zone de fixation (64) est inférieure à un tiers du diamètre du moignon d'essieu (D₆₄) au niveau de la zone de fixation (64).

2. Système d'essieu selon la revendication 1,
dans lequel
le rapport de la distance minimale (aₘᵢₙ) sur le diamètre du moignon d'essieu (D₆₄) est compris entre 0,05 et 0,25 et est de préférence d'environ 0,1 à 0,2.

3. Système d'essieu selon l'une des revendications précédentes,
dans lequel
le moignon d'essieu (6) présente un méplat au niveau de chaque portion de raccordement (21, 22, 23).

4. Système d'essieu selon l'une des revendications précédentes,
dans lequel
les portions de raccordement (21, 22) s'étendent à l'intérieur d'un premier secteur de cercle (25) situé dans le plan de raccordement (E),
le secteur de cercle s'étend sous un premier angle de secteur (α),
le premier angle de secteur (α) est dans la plage de 25° à 160° et de préférence dans la plage de 45° à 90°.

5. Système d'essieu selon l'une des revendications précédentes,
dans lequel
un support de frein (4) ayant une zone de fixation pour un étrier de frein (42) est immobilisé sur le moignon d'essieu (6),
l'étrier de frein (42) immobilisé sur le support de frein s'étend à l'intérieur d'un second secteur de cercle (45) projeté dans le plan de raccordement (E),
le second secteur de cercle (45) s'étend sous un second angle de secteur (β),
le second angle de secteur (β) est dans la plage de 90° à 240°, de préférence dans la plage de 160° à 200°.

6. Système d'essieu selon la revendication 4 et 5,
dans lequel
le second secteur de cercle (45) ne présente pas de chevauchement avec le premier secteur de cercle (25).

7. Système d'essieu selon l'une des revendications précédentes,
dans lequel
dans un état dans lequel le moignon d'essieu (6) est installé sur un véhicule utilitaire, les portions de raccordement (21, 22) sont disposées sur le côté du moignon d'essieu (6) détourné de la chaussée.

8. Système d'essieu selon l'une des revendications précédentes,
dans lequel
les portions de raccordement (21, 22) présentent chacune un élément de vissage (26),
les éléments de vissage (26) présentent chacun un filetage pour venir en engagement avec le moignon d'essieu (6).

9. Système d'essieu selon l'une des revendications précédentes,
dans lequel
un interstice ayant une largeur minimale est dégagé entre les portions de raccordement (21, 22),
la largeur est de 0,8 à 1,3 fois le diamètre maximum des portions de raccordement (21, 22).

10. Système d'essieu selon l'une des revendications précédentes,
dans lequel
les portions de raccordement (21, 22) sont réalisées sensiblement à symétrie de révolution autour d'un axe de raccordement respectif (A₂₁, A₂₂), les axes de raccordement (A₂₁, A₂₂) se situent dans le plan de raccordement (E),
les axes de raccordement (A₂₁, A₂₂) définissent un angle de raccordement (γ),
l'angle de raccordement (γ) est supérieur à 20° et de préférence supérieur ou égal à 30°.

11. Système d'essieu selon l'une des revendications précédentes,
dans lequel
un élément formant bras de direction (8) peut être immobilisé directement ou indirectement sur le moignon d'essieu (6), sur le côté des portions de raccordement (21, 22) détourné de la zone de fixation (64),
la distance minimale (cₘᵢₙ) des portions de raccordement (21, 22) par rapport à l'élément formant bras de direction (9) est inférieure à deux tiers du diamètre de moignon d'essieu (D₆₄) au niveau de la zone de fixation (64).

12. Système d'essieu selon l'une des revendications précédentes,
dans lequel
outre la première et la seconde portion de raccordement (21, 22), d'autres portions de raccordement (23) sont prévues sur le moignon d'essieu (6), qui se situent dans le plan de raccordement (E).

13. Système d'essieu selon la revendication 12,
dans lequel
il est prévu trois portions de raccordement (21, 22, 23).

14. Système d'essieu selon l'une des revendications précédentes,
dans lequel
au moins la majorité des portions de raccordement (21, 22, 23) ou la totalité des portions de raccordement (21, 22, 23) présente la même distance par rapport à la zone de fixation (64).
